# EUROPÄISCHE PATENTSCHRIFT

(11) **EP 1 477 721 B1**
(45) Veröffentlichungstag und Bekanntmachung des Hinweises auf die Patenterteilung: **14.06.2006**
(21) Anmeldenummer: 04009756.0
(22) Anmeldetag: 24.04.2004
(51) Int. Cl.: F16N 7/38, F16N 7/40, F01M 1/02

(54) **Einrichtung zur Ölversorgung der Lagerstellen einer rotierenden Welle**
Device for lubricating the bearings of a rotating shaft
Dispositif de graissage des paliers d'un arbre tournant

(30) Priorität: 13.05.2003 DE 10321326
(43) Veröffentlichungstag der Anmeldung: 17.11.2004
(73) Patentinhaber: Pfeiffer Vacuum GmbH, 35614 Asslar (DE)
(72) Erfinder: Blecker, Armin, 35614 Asslar (DE); Lotz, Heinrich, 35580 Wetzlar (DE)

(56) Entgegenhaltungen:
- FR-A- 892 490
- GB-A- 662 147
- SU-A- 1 505 781

## Beschreibung

Die Erfindung betrifft eine Einrichtung zur Ölversorgung der Lagerstellen einer rotierenden Welle nach dem Oberbegriff des ersten Schutzanspruches.

Bei umlaufenden Wellen, welche in ölgeschmierten Lagern fixiert sind, muss die kontinuierliche Ölzufuhr durch eine Ölfördereinrichtung sicher gestellt werden. Dazu existieren unterschiedliche Lösungen. Zum Beispiel wird durch eine separat angetriebene Ölpumpe das Öl über Rohrleitungen den Lagerstellen zugeführt. Es ist auch bekannt, das untere Ende einer vertikalen Welle in einen Ölvorrat zu tauchen und durch eine geeignete Konstruktion, zum Beispiel schraubenförmige Ausbildung eines Teils der Welle, eine Fördervorrichtung zu schaffen, welche den Lagerstellen das Öl zuführt. Die Ölzufuhr aus einem Ölvorrat zu den Lagern kann auch über Dochte erfolgen. Eine Ölflussüberwachung ist jedoch bei dieser Lösung nicht möglich

In allen diesen Fällen ist eine kontinuierliche und gleichmäßige Ölzufuhr von der Einbaulage der Rotorwelle abhängig. In vielen Anwendungsfällen ist es wünschenswert, dass die Einbaulage der Rotorwelle nicht starr vorgegeben, sondern variabel handbar ist und der jeweiligen Anwendung angepasst werden kann. So ist zum Beispiel oft der Einsatz von Turbomolekularpumpen, welche mit schnelldrehenden Rotorwellen ausgestattet sind, bei denen die kontinuierliche und gleichmäßige Ölzufuhr zu den Lagerstellen besonders wichtig ist, in unterschiedlichen Einbaulagen gefordert. Diese reichen von senkrechten über waagrechte bis hin zu Überkopfpositionen.

Die FR 892 490 A schlägt zur Verbesserung der Schmierung einer drehenden Welle vor, diese Welle mit gegenläufigen Förderkanälen zu versehen. Zusätzlich zu dieser Förderstruktur wird eine Schmiermittelpumpe benötigt, die den Schmiermittelfluss in Gang hält. Die Vorrichtung kann nicht lageunabhängig betrieben werden.

Die GB 662,147 stellt eine Einrichtung zur Versorgung von Lagerstellen mit Schmiermittel vor, bei der die Schmierung von der Drehung des Schmiermittelreservoirs abhängig ist, d.h. Ölpumpen von der Welle angetrieben werden.

Mit herkömmlichen Ölversorgungseinrichtungen sind diese variablen Einsatzmöglichkeiten sehr begrenzt. Beim Transport von Geräten mit Ölversorgung für Lagerstellen muss das Öl aus dem Reservoir entfernt werden, da eine vorgeschriebene Lage nicht während des gesamten Transportes eingehalten werden kann.

Der Erfindung liegt die Aufgabe zugrunde, eine Einrichtung zur Ölversorgung der Lagerstellen einer Rotorwelle zu konstruieren, durch welche die Sicherung einer kontinuierlichen und gleichmäßigen Ölzufuhr einschließlich Ölflussübewachung, unabhängig von der Einbaulage der Welle, gewährleistet ist. Eine solche Einrichtung soll einen Transport von Geräten mit Ölfüllung in beliebiger Lage ermöglichen, ohne dass nachteilige Folgen entstehen.

Die Aufgabe wird durch die Merkmale des 1. Schutzanspruches gelöst. Die Ansprüche 2 - 4 stellen weitere Ausgestaltungsformen der Erfindung dar.

Die erfindungsgemäße Einrichtung ermöglicht eine kontinuierliche Ölversorgung von Lagerstellen, unabhängig von Lage und Einbaurichtung der Welle und ihrer Lager. Die Ölflussfberwachung ist mit ansich bekannten Mitteln möglich. Eine Ölzufuhr, bei der der Ölstrom nicht abreißt, unabhängig von der Lage der Welle, ist besonders wichtig bei schnelldrehenden Wellen, wie zum Beispiel bei Turbomolekularpumpen oder Ultrazentrifugen. Der Transport kann mit Ölfüllung durchgeführt werden, ohne dass ständig eine bestimmte Lage eingehalten werden muss.

Anhand der Figuren 1 - 4 soll die Erfindung an einem Beispiel in verschiedenen Positionen der Welle näher erläutert werden.
Fig. 1 zeigt die erfindungsgemäße Anordnung mit senkrecht stehender Welle.
Fig. 2 zeigt die erfindungsgemäße Anordnung mit senkrecht stehender Welle im Überkopfbetrieb.
Fig. 3 zeigt die erfindungsgemäße Anordnung mit waagrecht stehender Welle.
Fig. 4 zeigt die erfindungsgemäße Anordnung mit schräg stehender Welle.

Eine Welle 3 wird durch das Lager 5 fixiert. Weitere Lager, die zur Fixierung der Lager notwendig sind, sind hier nicht dargestellt. Die Anordnung zur Ölversorgung ist in dem Gehäuse 1 untergebracht. Der Ölkreislauf wird durch die Ölpumpe 8 in Gang gehalten. Diese ist mit zwei Spindeln 10 und 11 mit gegenläufigen Kanälen versehen. Das Ölreservoir 14 umfasst das Lager 5 und ragt axial in beide Richtungen über das Lager hinaus. Der Ölstand ist in den verschiedenen Positionen der Anordnung jeweils mit 18 bezeichnet. Über ein System von Förderleitungen 20 und einen Förderkegel 22 wird das Öl der Lagerstelle 5 zugeführt. Der Förderkegel 22 kann auch durch andere, an sich bekannte Fördereinrichtungen ersetzt werden. Durch Rückflussleitungen 24, 25, 26, 27 gelangt das Öl wieder in das Ölreservoir 14. Dabei sind die Rückflussleitungen 24, 25 und 26, 27 jeweils auf axial entgegengesetzten Seiten der Lagerstelle angebracht. Zur Verhinderung von Ölrücklauf ragen die Rückflussleitungen bei 34, 35, 36, 37 in das Ölreservoir hinein. Durch eine Labyrinthanordnung 28 erfolgt die Abdichtung zum Wellenspalt 4.

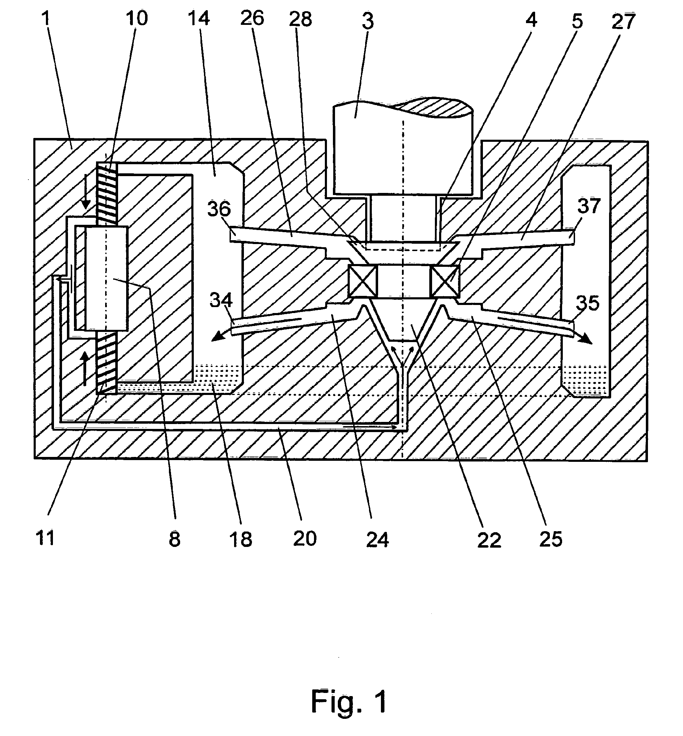

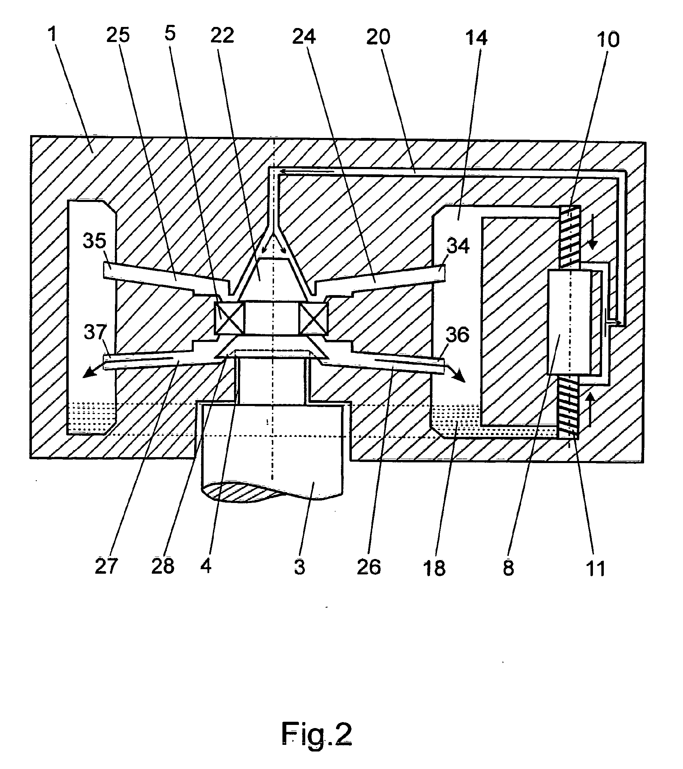

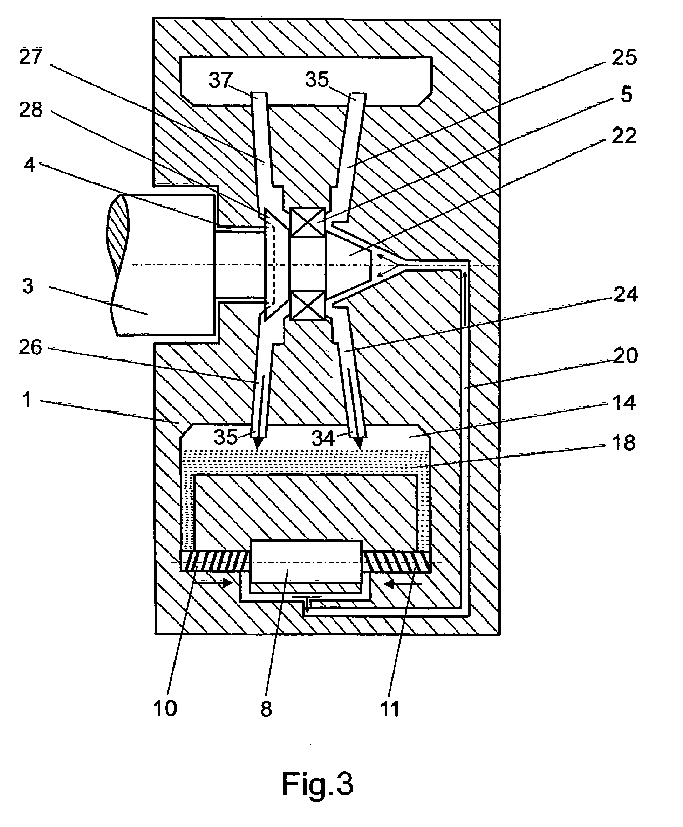

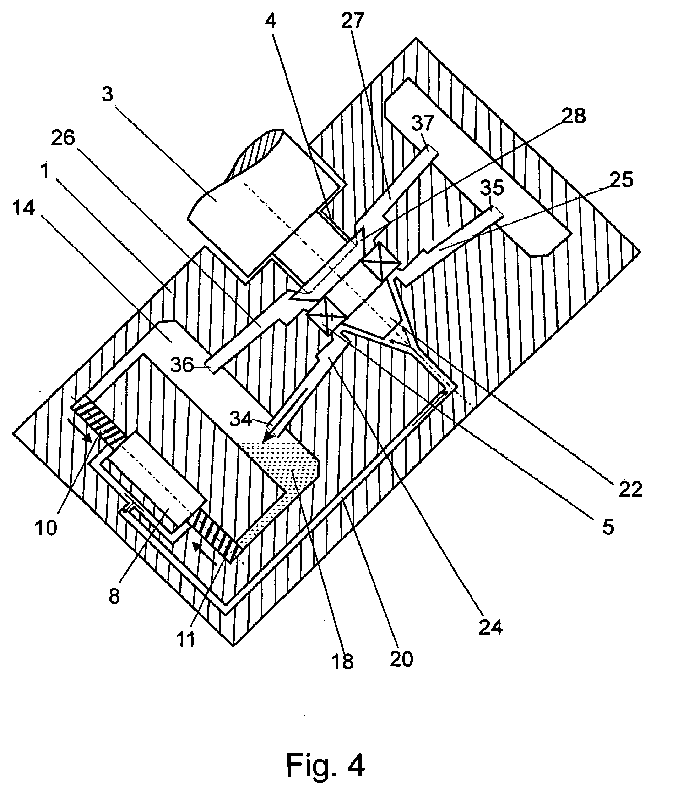

Damit die Ölzufuhr zur Lagerstelle in allen Positionen, welche durch die Fig. 1 - 4 dargestellt sind, gesichert ist, muss das Ölniveau 18 so hoch sein, dass das Ende einer Spindel in allen Lagen immer in Öl eingetaucht ist. Dies ist auch wichtig, damit die Ölzufuhr zum jeweils oberen Lager der Ölpumpe gesichert ist. Wie aus Fig. 1 und 2 hervorgeht, steht das Öl bei senkrechtem Betrieb in einem ringförmigen Teil des Ölreservoirs 14. Bei waagrechtem Betrieb wie in Fig. 3 sammelt sich das Öl in einem unteren Segment des Ölreservoirs. Beim Betrieb mit schräg stehender Welle wie in Fig. 4 nimmt das Ölniveau eine mittlere Position ein. Somit ist eine kontinuierliche Ölzufuhr zur Lagerstelle in allen Positionen der Welle gewährleistet.

## Patentansprüche

1. Einrichtung zur Ölversorgung von Lagerstellen (5) einer rotierenden Welle (3), die aufweist:
ein ringförmiges Ölreservoir (14), welches die Lagerstelle (5) umfasst, einer Ölpumpe (8), mit einem Ölförderleitungssystem (20), durch welches Öl der Lagerstelle zugeführt wird, Ölrücklaufleitungen (24, 25, 26, 27) welche zum Teil (24, 25) auf der einen Seite der Lagerstelle und zum Teil (26, 27) auf der in axialer Richtung gegenüberliegenden Seite der Lagerstelle angeordnet sind und durch welche das Öl zurück in das Reservoir gelangt,
**dadurch gekennzeichnet, dass**
die Ölpumpe (8) mit zwei Spindeln (10, 11) mit gegenläufigen Förderkanälen versehen ist, von denen wenigstens eine immer in Öl eingetaucht ist, so dass eine kontinuierliche Versorgung der Ölpumpe und der Lagerstelle in allen Positionen der Welle gewährleistet ist.

2. Einrichtung nach Anspruch 1, **dadurch gekennzeichnet, dass** am Ende der Welle (3) zwischen der Lagerstelle (5) und den Ölförderleitungen (20) ein Förderkegel angebracht ist.

3. Einrichtung nach Anspruch 1 oder 2, **dadurch gekennzeichnet, dass** die Ölrücklaufleitungen (24, 25, 26, 27) an den Stellen (34, 35, 36, 37) in das Ölreservoir (14) hinein ragen.

4. Einrichtung nach einem der vorangehenden Ansprüche, **dadurch gekennzeichnet, dass** zwischen der Lagerstelle (5) und einem Wellenspalt (4) eine labyrinthförmige Abdichtung (28) vorhanden ist.

## Claims

1. Device for supplying oil to bearing points (5) of a rotating shaft (3), comprising:
an annular oil reservoir (14), which surrounds the bearing point (5), of an oil pump (8), with an oil-pumping line system (20), through which oil is fed to the bearing point, oil return lines (24, 25, 26, 27), which are disposed some (24, 25) at the one side of the bearing point and some (26, 27) at the axially opposite side of the bearing point and through which the oil passes back into the reservoir ,
**characterised in that**
the oil pump (8) is provided with two spindles (10, 11) with oppositely directed delivery channels, of which spindles at least one is always immersed in oil so that a continuous supply of the oil pump and the bearing point is guaranteed in all positions of the shaft.

2. Device according to claim 1, **characterised in that** on the end of the shaft (3) between the bearing point (5) and the oil-pumping lines (20) there is attached a delivery cone.

3. Device according to claim 1 or 2, **characterised in that** the oil return lines (24, 25, 26, 27) project a the points (34, 35, 36, 37) into the oil reservoir (14).

4. Device according to one of the preceding claims, **characterised in that** a labyrinth-shaped seal(28) is provided between the bearing point (5) and a shaft gap (4).

## Revendications

1. Dispositif de graissage des paliers (5) d'un arbre tournant (3) qui comprend :
un réservoir d'huile annulaire (14) entourant le palier (5), une pompe à huile (8) comprenant un système de transport d'huile (20) par lequel de l'huile est amenée au palier, des conduites de retour d'huile (24, 25, 26, 27) disposées pour partie (24, 25) d'un côté du palier et pour partie (26, 27) du côté opposé par rapport à l'axe du palier et par lesquelles l'huile retourne au réservoir, **caractérisé en ce que** la pompe à huile (8) est équipée de deux vis sans fin (10, 11) à canaux de transport opposés dont au moins l'une est en permanence plongée dans l'huile, de sorte que l'alimentation de la pompe (8) et des paliers (5) est assurée dans toutes les positions de l'arbre (3).

2. Dispositif selon la revendication 1, **caractérisé en ce qu'**un cône de transport (22) est monté à l'extrémité de l'arbre (3), entre le palier (5) et les conduites de transport d'huile (20).

3. Dispositif selon la revendication 1 ou 2, **caractérisé en ce que** les conduites de retour d'huile (24, 25, 26, 27) rentrent à l'intérieur du réservoir d'huile (14) aux points (34, 35, 36, 37).

4. Dispositif selon l'une quelconque des revendications précédentes, **caractérisé en ce qu'**une garniture d'étanchéité en labyrinthe (28) est présente entre le palier (5) et un interstice (4) de l'arbre (3).
